## Europäisches Patentamt

## European Patent Office

## Office européen des brevets

Veröffentlichungsnummer: **0 309 829**

**A1**

## EUROPÄISCHE PATENTANMELDUNG

Anmeldenummer: **88115218.5**

Anmeldetag: **16.09.88**

Int. Cl.⁴ **G21C 17/00 , G01H 3/08**

Priorität: **29.09.87 DE 3732804**

Veröffentlichungstag der Anmeldung:
**05.04.89 Patentblatt 89/14**

Benannte Vertragsstaaten:
**BE DE ES FR GB IT**

Anmelder: **Siemens Aktiengesellschaft Berlin und München**
**Wittelsbacherplatz 2**
**D-8000 München 2(DE)**

Erfinder: **Wehling, Hans-Jochen, Dipl.-Ing.**
**Schulstrasse 28**
**D-8551 Wiesenthau(DE)**

Verfahren und Vorrichtung zur Überwachung der mechanischen Integrität einer Komponente.

Die Erfindung betrifft ein Verfahren und eine Vorrichtung zur Überwachung der mechanischen Integrität einer Komponente, insbesondere eines Bauteiles (1) des Kühlsystems eines Leichtwasser- Reaktors. Es ist vorgesehen, mit einem Sensor (2) in definierten zeitlichen Abständen Signalverläufe, insbesondere Schwingungssignalverläufe aufzunehmen. Jeder dieser Signalverläufe wird in einem Fourier-Tansformator (3) durch eine Fourier-Transformation in ein Spektrum, das den Frequenzverlauf zeigt, umgewandelt. Aus dem Spektrum werden diskrete Frequenzen einer ausgewählten Komponente ausgewählt. Zunächst werden als Vergleichsfrequenzen die Frequenzen der ausgewählten Komponente in einem Vergleichszustand bestimmt. Im Betrieb werden dann die aktuellen Frequenzen der ausgewählten Komponente gemessen und auf den Vergleichszustand in einer Normierungseinheit (6) normiert. Die Differenz oder der Quotient von normierter Frequenz und Vergleichsfrequenz wird in einem Differenzen- oder Quotientenbildner (5) berechnet. Dann wird die aktuelle Abweichung mit einer zuvor festgelegten tolerierbaren Abweichung in einem Komparator (8) verglichen. Falls eine nichttolerierbare Abweichung auftritt, wird mit einer Alarmeinrichtung (11) Alarm gegeben. Außerdem kann mit einer Aufzeichnungseinrichtung (10) angezeigt werden, welche Komponente betroffen ist.

## Verfahren und Vorrichtung zur Überwachung der mechanischen Integrität einer Komponente

Die Erfindung betrifft ein Verfahren zur Überwachung der mechanischen Integrität einer von mehreren Komponenten, insbesondere eines Bauteiles des Kühlsystems eines Leichtwasser-Reaktors.

Mögliche Schäden an mechanischen Strukturen oder Komponenten machen sich durch Änderungen in deren Schwingungsverhalten bemerkbar. Insbesondere kommt es zu Frequenzänderungen aber auch zu Amplitudenänderungen.

Zum Erkennen eines Schadens ist es bekannt, das Spektrum der betreffenden Komponente zu überwachen. Dabei werden in zeitlichen Abständen von einem geeigneten Sensor, insbesondere Schwingungssensor, in Verbindung mit einem Fourier-Transformator Spektren aufgenommen. Ein derartiges Fourier-Spektrum zeigt die Signalintensität abhängig von der Frequenz des Signales. Das Spektrum charakterisiert eindeutig den mechanischen Zustand der überwachten Komponente.

Falls die Komponente nicht beschädigt wird, bleibt das Spektrum gleich. Ist jedoch die mechanische Integrität der Komponente durch einen Schaden oder Defekt nicht mehr gegeben, dann erhält man ein Spektrum, das vom ursprünglichen Spektrum abweicht. Zur Überwachung der mechanischen Integrität werden demnach für die Komponente in zeitlichen Abständen Spektren aufgenommen. Ein Vergleich dieser Spektren z.B. mit dem ursprünglichen Spektrum läßt Abweichungen sofort erkennen. Eine Abweichung ist ein Indiz für einen veränderten mechanischen Zustand der überwachten Komponente. Eine Überprüfung der betreffenden Komponente kann dann erforderlich sein.

Bei bekannten Verfahren werden nur die Spektren apparativ erstellt. Der Vergleich der gewonnenen Spektren miteinander wird durch einen Fachmann vorgenommen. Ein derartiges Verfahren ist sehr aufwendig. Das Ergebnis ist subjektiv beeinflußt. Der Vergleich von zwei sehr ähnlichen Spektren, die beispielsweise als Papier-Ausdruck vorliegen, ist selbst für einen Fachmann schwer durchführbar. Relativ kleine, aber dennoch bedeutende Abweichungen von zwei nacheinander bestimmten Spektren sind oft anhand der Ausdrucke nicht wahrzunehmen. Dadurch bleiben Defekte an der Komponente unerkannt.

Der Erfindung liegt die Aufgabe zugrunde, ein Verfahren zur Überwachung der mechanischen Integrität einer ausgewählten Komponente in einem System von Komponenten anzugeben, das ohne einen visuellen Vergleich ausgedruckter Spektren durch einen Fachmann auskommt und objektiv nachvollziehbar ist. Das Verfahren soll soweit vereinfacht und automatisiert sein, daß Hinweise auf den Zustand der betreffenden Komponente in einem großen System, wie dem Reaktorkühlsystem eines Leichtwasser-Reaktors, aus leicht lesbaren Daten, beispielsweise aus einer Tabelle, selbst für einen Nichtfachmann ersichtlich sind. Dabei soll dann auch auf einfache Weise zu erkennen sein, welche Komponente des Systems die Abweichung des später aufgenommenen Spektrums verursacht hat, wodurch eine einfache und schnelle Lokalisierung einer Beschädigung möglich ist. Auch soll eine Einrichtung zur Durchführung des Verfahrens angegeben werden.

Diese Aufgabe wird erfindungsgemäß dadurch gelöst, daß mit einem Sensor in definierten zeitlichen Abständen Signalverläufe aufgenommen werden, die insbesondere Schwingungssignalverläufe sind, daß jeder dieser Signalverläufe durch eine Fourier-Transformation in ein Spektrum, das den Frequenzverlauf zeigt, umgewandelt wird, daß aus dem Spektrum diskrete Frequenzen der ausgewählten Komponente ausgewählt werden, daß als Vergleichsfrequenzen die Frequenzen der ausgewählten Komponente zunächst in einem Vergleichszustand bestimmt werden, daß dann die aktuellen Frequenzen der ausgewählten Komponente im Betrieb bestimmt werden, daß die aktuellen Frequenzen auf den Vergleichszustand normiert werden, daß die Differenz oder der Quotient jeweils von normierter Frequenz und Vergleichsfrequenz berechnet wird, was eine aktuelle Abweichung (z.B. Frequenzabweichung) ergibt, daß die aktuelle Abweichung mit einer zuvor festgelegten tolerierbaren Abweichung verglichen wird, und daß, falls eine nichttolerierbare Abweichung auftritt, Alarm gegeben wird. Auf diese Weise ist erkennbar, an welcher Komponente und zu welchem Zeitpunkt eine Änderung, wie Austausch oder Reparatur, zu erfolgen hat.

Der Vergleichszustand der Komponenten, beispielsweise derjenige eines Reaktorkühlsystems, ist beispielsweise der Neuzustand unmittelbar nach Fertigstellung der Anlage. Der Vergleichszustand kann aber auch zu einem beliebigen späteren Zeitpunkt festgelegt werden, falls sicher ist, daß in diesem Zeitpunkt Defekte an der Anlage nicht vorliegen. Im Vergleichszustand wird für jede zu überwachende Komponente ihre Schwingungsfrequenz gemessen. Diese Werte, Vergleichsfrequenzen genannt, werden für jede Komponente abgespeichert.

Wenn die zu überwachende Anlage in Betrieb ist, werden zu bestimmten Zeitpunkten für die zu überwachenden Komponenten die aktuellen Schwingungsfrequenzen einzeln ermittelt. Die ermittelten Werte werden dann hinsichtlich äußerer Einflüsse, wie beispielsweise der Temperatur, auf den Vergleichszustand normiert.

Die Differenz oder der Quotient von normierter Frequenz im Betrieb und Vergleichsfrequenz ergibt dann die Abweichung, z.B. die Frequenzabweichung. Falls diese einen zuvor festgelegten tolerierbaren Wert übersteigt, wird ein Alarm ausgelöst. Diese Verfahrensweise erfolgt getrennt für jede einzelne zu überwachende Komponente, und zwar nacheinander. Daher ist sofort zu erkennen, an welcher der zu überwachenden Komponenten ein Defekt vorliegt.

Eine Normierung ist vorliegend vorgesehen, um die zwischen Ursprungsmessung und aktueller Messung veränderten Betriebsbedingungen der Komponente des Systems, z.B. veränderte Temperatur, zu berücksichtigen. Beispielsweise kann ursprünglich das System, das z.B. ein Kraftwerk, insbesondere ein Kernkraftwerk ist, unter Vollast gefahren worden sein, während bei der späteren Überwachung nur Teillastbetrieb vorliegt.

Mit dem erfindungsgemäßen Verfahren wird der Vorteil erzielt, daß die Überwachungsergebnisse eindeutig den einzelnen zu überwachenden Komponenten zuzuordnen sind. Daher ist zur Auswertung der Überwachungsergebnisse ein qualifizierter Fachmann nicht erforderlich; trotzdem werden Defekte in einem System aus verschiedenen Komponenten nicht nur erkannt, sondern auch lokalisiert.

Falls ein Defekt an einer Komponente auftritt, beispielsweise Versagen einer Verschraubung, ändert sich deren Schwingungsfrequenz. Der Vergleich zwischen der bei unbeschädigter Komponente gemessenen Vergleichsfrequenz und der Betriebsfrequenz ergibt folglich eindeutig einen Hinweis auf eine veränderte mechanische Integrität der Komponente, also auf einen Defekt.

Ergänzend zum geschilderten Verfahren der Frequenzmessung werden auch die Magnituden (z.B. Amplituden) von Spektren des Vergleichszustandes und des aktuellen Zustandes der Anlage, die insbesondere ein Reaktorkühlsystem ist, verglichen. Hauptaufgabe dieser Überwachung ist es festzustellen, ob in den überwachten Spektren neue Maxima auftreten oder alte verschwinden. Falls eine nichttolerierbare Abweichung der Magnituden der beiden Spektren auftritt, ist dies ebenfalls ein Hinweis auf einen Defekt, so daß Alarm gegeben wird und weitere Maßnahmen ergriffen werden.

Vorliegend wird also kein optischer Vergleich der Magnituden von zwei Spektren durch einen Fachmann durchgeführt. Vielmehr wird der Magnitudenvergleich in einer Auswerteeinheit ausgeführt. Aussagekraft und Objektivität der Ergebnisse werden dadurch gesteigert. Der vorliegend durchgeführte Magnitudenvergleich wäre allein zur sicheren Überwachung nicht ausreichend. In Verbindung mit dem zuvor beschriebenen automatischen Frequenzvergleich wird jedoch eine noch größere Zuverlässigkeit als mit dem Frequenzvergleich allein erzielt.

Die Ergebnisse der Überwachung können vorliegend beispielsweise in Überwachungslisten und Spektren dokumentiert werden. Dabei ist die Darstellungsweise der Ergebnisse schon vor dem Start einer Überwachung in einer Auswerteeinheit festgelegt. Nur falls Änderungen der Darstellung gewünscht werden, sind diese einzeln vorzunehmen. Damit erzielt man den Vorteil, daß eine vollständige Angabe aller notwendigen Darstellungsparameter nicht für eine jede Überwachung erforderlich ist.

Eine Einrichtung zur Durchführung des Verfahrens weist erfindungsgemäß einen Sensor auf, der an einer Komponente angeordnet ist zur Aufnahme von Schwingungssignalverläufen. Der Sensor ist ausgangsseitig mit einem Fourier-Transformator zur Bildung eines Frequenzspektrums verbunden. Dieser Fourier-Transformator ist mit einem Speicher verbunden. Zur Übermittlung eines zuvor bestimmten Vergleichsfrequenzspektrums ist ein erster Ausgang des Speichers mit einem ersten Eingang eines Differenzen- oder Quotientenbildners direkt verbunden. Zur Übermittlung des aktuellen Frequenzspektrums ist ein zweiter Ausgang des Speichers über eine Normierungseinheit mit einem zweiten Eingang des Differenzen- oder Quotientenbildners verbunden. In der Normierungseinheit erfolgt eine Normierung des aktuellen Frequenzspektrums auf das Vergleichsfrequenzspektrum hinsichtlich äußerer Bedingungen, wie der Temperatur der Komponente während der Messungen. Zur Steuerung der Normierung und der Differenzenbildung oder Quotientenbildung sind der Sensor, der Speicher und die Normierungseinheit mit einer Steuereinheit verbunden. Mittels der Steuereinheit werden die gewonnenen aktuellen, normierten Frequenzen mit Vergleichswerten, z.B. Vergleichsfrequenzen im Differenzen- oder Quotientenbildner verglichen. Der Ausgang des Differenzen- oder Quotientenbildners steht mit dem ersten Eingang eines Komparators in Verbindung, dessen zweiter Eingang mit einer Eingabeeinheit für einen tolerierbaren Höchstwert der Differenz oder des Quotienten verbunden ist. Der Ausgang des Komparators ist mit einer Aufzeichnungseinrichtung verbunden, die mit einer Alarmeinrichtung gekoppelt ist. Es kann aber auch nur eine Aufzeichnungseinrichtung oder nur eine Alarmeinrichtung vorhanden sein.

Mit der Erfindung wird insbesondere der Vorteil erzielt, daß an die Stelle des optischen Vergleiches von zwei ausgedruckten Spektren, den nur ein qualifizierter Fachmann wegen der notwendigen Interpretationen durchführen kann, konkrete Meßwerte, insbesondere Frequenzwerte treten, die weitgehend automatisch auf Abweichungen untersucht werden. Falls nicht tolerierbare Abweichungen auftreten, wird automatisch Alarm gegeben. Darüber hinaus wird mit der Erfindung der Vorteil erzielt, daß aufgrund der Zuordnung der Meßgrößen zu bestimmten Komponenten an den Ergebnissen sofort ablesbar ist, an welcher Komponente ein erkannter Defekt aufgetreten ist. Der Grad der Abweichung der Meßwerte läßt außerdem erkennen, ob zur Beseitigung einer Beschädigung sofort oder zu einem späteren Zeitpunkt gehandelt werden muß.

Mit der Erfindung werden ein weitgehend automatisiertes Verfahren und eine entsprechend arbeitende Vorrichtung zur Überwachung der mechanischen Integrität von Komponenten in einem KomponentenSystem zur Verfügung gestellt, das Beurteilungskriterien beinhaltet und das insbesondere zur Überwachung von Bauteilen des Reaktorkühlsystems von Leichtwasser-Reaktoren gut geeignet ist.

Das erfindungsgemäße Verfahren wird hauptsächlich eingesetzt zum ständigen Überwachen des Kühlsystems von Kernkraftwerken auf Bauteilveränderungen.

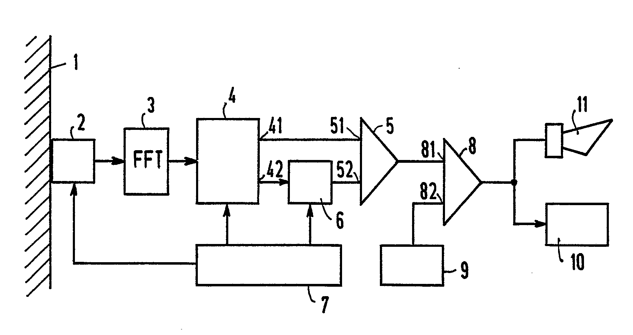

Die Erfindung wird anhand der Zeichnung näher erläutert:

Die Zeichnung zeigt eine Einrichtung zur Durchführung des erfindungsgemäßen Verfahrens zur Überwachung der mechanischen Unversehrtheit eines Bauteiles in einem System, z.B. in einem Reaktorkühlsystem, das auf mögliche Bauteilveränderungen untersucht wird.

An einem Bauteil 1, z.B. einem Kernbehälter des Kühlsystems eines Leichtwasser-Reaktors ist ein Schwingungsaufnehmer oder Sensor 2 zur Aufnahme von zeitlichen Schwingungssignalverläufen angeordnet. Die Schwingungen werden z.B. durch das durch das Bauteil 1 strömende Kühlmittel, beispielsweise Wasser, verursacht. Mit dem Sensor 2 ist ausgangsseitig ein Fourier-Transformator 3 verbunden, der mit einem Speicher 4 in Verbindung steht. Der Fourier-Transformator 3 ist insbesondere ein FFT und dient zur Umwandlung des Zeitsignales in ein Spektrum. Ein erster Ausgang 41 des Speichers 4 ist direkt mit einem ersten Eingang 51 eines Quotientenbildners 5 verbunden. Ein zweiter Ausgang 42 des Speichers 4 steht über eine Normierungseinheit 6 mit einem zweiten Eingang 52 des Quotientenbildners 5 in Verbindung. Anstelle des Quotientenbildners 5 kann auch ein (nicht gezeigter) Differenzenbildner verwendet werden. Die Normierungseinheit 6 dient dazu, den Eingangswert hinsichtlich vorgegebener Parameter wie Temperatur, Druck etc. abzuändern. Die Eingangssignale an den Eingängen 51 und 52 des Quotientenbildners 5 werden für jede Frequenz miteinander in Relation gesetzt. Zur Steuerung stehen der Sensor 2, der Speicher 4 und die Normierungseinheit 6 mit einer Steuereinheit 7 in Verbindung.

Der Ausgang des Quotientenbildners 5 ist mit dem ersten Eingang 81 eines Komparators 8 verbunden. Mit dessen zweitem Eingang 82 ist eine Eingabeeinheit 9 für einen wählbaren vom Wert Eins abweichenden noch tolerierbaren Wert für jeden Quotienten verbunden. Der Ausgang des Komparators 8 ist mit einer Aufzeichnungseinrichtung 10 und mit einer Alarmeinrichtung 11 verbunden.

Am Bauteil 1 werden mit dem Sensor 2 zeitliche Schwingungsignalverläufe für eine feste Zeitspanne aufgenommen. Diese werden dann im Fourier-Transformator 3 in ein Frequenzspektrum transformiert. Zunächst wird ein Vergleichsfrequenzspektrum für einen unversehrten Zustand des Bauteiles 1 im Speicher 4 abgespeichert. Danach wird jeweils das aktuelle Frequenzspektrum im Speicher 4 abgespeichert. In der Normierungseinheit 6 werden einzelne Frequenzen des aktuellen Frequenzspektrums hinsichtlich vorgegebener Parameter wie z.B. Temperatur und Druck auf das Vergleichsfrequenzspektrum normiert. Die normierten Frequenzen werden im Quotientenbildner 5 mit den zugehörigen Frequenzen des Vergleichsfrequenzspektrums verglichen. Zur Steuerung des Sensors 2, des Speichers 4 und der Normierungseinheit 6 dient die Steuereinheit 7.

Falls eine normierte Frequenz und die zugehörige Vergleichsfrequenz voneinander abweichen, wird deren Quotient im Komparator 8 mit einem noch tolerierbaren Wert verglichen. Erst bei einer Überschreitung dieses tolerierbaren Wertes wird die Alarmeinrichtung 11 aktiviert oder es wird die Abweichung mit der Aufzeichnungseinrichtung 10 protokolliert. Eine Abweichung weist auf einen Defekt im Bauteil 1 hin. Im Komparator 8 können für einzelne Frequenzen Vergleiche der Quotienten mit unterschiedlichen tolerierbaren Werten erfolgen.

Die Verarbeitung der Meßwerte kann auch mit einem Rechenprogramm erfolgen.

## Ansprüche

1. Verfahren zur Überwachung der mechanischen Integrität einer Komponente, insbesondere eines Bauteiles (1) des Kühlsystems eines Leichtwasser-Reaktors, **dadurch gekennzeichnet,** daß mit einem Sensor (2) in definierten zeitlichen Abständen Signalverläufe aufgenommen werden, die insbesondere Schwingungssignalverläufe sind, daß jeder dieser Signalverläufe durch eine Fourier-Transformation in ein Spektrum, das den Frequenzverlauf zeigt, umgewandelt wird, daß aus dem Spektrum diskrete Frequenzen einer ausgewählten Komponente ausgewählt werden, daß als Vergleichsfrequenzen die Frequenzen der ausgewählten Komponente zunächst in einem Vergleichszustand bestimmt werden, daß dann die aktuellen Frequenzen der ausgewählten Komponente im Betrieb bestimmt werden,

daß die aktuellen Frequenzen auf den Vergleichszustand normiert werden,

daß die Differenz oder der Quotient jeweils von normierter Frequenz und Vergleichsfrequenz berechnet wird, was eine aktuelle Abweichung ergibt,

daß die aktuelle Abweichung mit einer zuvor festgelegten tolerierbaren Abweichung verglichen wird und

daß, falls eine nichttolerierbare Abweichung auftritt, Alarm gegeben wird und weitere Maßnahmen zu ergreifen sind.

2. Verfahren nach Anspruch 1, **dadurch gekennzeichnet,** daß von Spektren des Vergleichszustandes und des aktuellen Zustandes die Magnituden durch Differenz bildung oder durch Quotientenbildung verglichen werden und daß, falls nicht tolerierbare Magnitudenabweichungen auftreten, Alarm gegeben wird und weitere Maßnahmen zu ergreifen sind.

3. Verfahren nach den Ansprüchen 1 und 2, **dadurch gekennzeichnet,** daß Ergebnisse in Überwachungslisten und/oder Spektren dokumentiert werden.

4. Verfahren nach Anspruch 3, **dadurch gekennzeichnet,** daß die Darstellungsweise der Ergebnisse vor dem Start einer Überwachung festgelegt wird und daß Änderungen der Darstellungsweise einzeln vorzunehmen sind.

5. Einrichtung zur Überwachung der mechanischen Integrität einer Komponente, insbesondere eines Bauteiles (1) des Kühlsystems eines Leichtwasser-Reaktors nach Anspruch 1, **dadurch gekennzeichnet,** daß an der Komponente ein Sensor (2) angeordnet ist, insbesondere ein Sensor (2) zur Aufnahme von Schwingungssignalverläufen,

daß der Sensor (2) mit einem Fourier-Transformator (3) zur Bildung eines Frequenzspektrums verbunden ist,

daß der Fourier-Transformator (3) mit dem Eingang eines Speichers (4) verbunden ist, der zwei Ausgänge (41 und 42) aufweist,

daß der erste Ausgang (41) des Speichers (4) mit dem ersten Eingang (51) eines Differenzen- oder Quotientenbildners (5) verbunden ist,

daß der zweite Ausgang (42) des Speichers (4) über eine Normierungseinheit (6) mit dem zweiten Eingang (52) des Differenzen- oder Quotientenbildners (5) in Verbindung steht,

daß mit dem Sensor (2), dem Speicher (4) und mit der Normierungseinheit (6) eine Steuereinheit (7) verbunden ist,

daß mit dem Ausgang des Differenzen- oder Quotientenbildners (5) der erste Eingang (81) eines Komparators (8) verbunden ist, mit dessen zweitem Eingang (82) eine Eingabeeinheit (9) für eine tolerierbare Abweichung verbunden ist, und

daß der Ausgang des Komparators (8) mit einer Aufzeichnungseinrichtung (10) und/oder einer Alarmeinrichtung (11) in Verbindung steht.

87 P 6096

**Europäisches Patentamt**

**EUROPÄISCHER RECHERCHENBERICHT**

Nummer der Anmeldung

EP 88 11 5218

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | VDI BERICHTE, Nr. 568, 1985, Seiten 1-18; V. BAUERNFEIND et al.; "Schwingungs- und Körperschallüberwachung an Primärkreiskomponenten von Kernkraftwerken" * Seite 3, Zeilen 4-11; Seite 5, Zeilen 4-5; Seite 6, Letzte Zeile; Figuren 10-15; Seite 11, Zeilen 1-4 * --- | 1-5 | G 21 C 17/00 G 01 H 3/08 |
| X | DE-A-2 531 805 (R.J. SAVAGE) * Anspruch 14; Seite 9, Abschnitt 1; Figur 16; Seite 30, Abschnitt 2 - Seite 31, Zeile 6; Seite 33, Zeile 3 von unten - Seite 34, Zeile 8; Seite 36, Zeilen 3-7 * --- | 1,3,4 | |
| A | DE-A-3 408 659 (VDO) * Ansprüche 1,2,4; Seite 6, Zeilen 4-12 * --- | 1-5 | |
| A | KERNENERGIE, Band 29, Nr. 12, Dezember 1986, Seiten 457-465, Berlin, DD; B. FRANKENSTEIN et al.: "RAS III - ein modulares Rauschdiagnosesystem" --- | | **RECHERCHIERTE SACHGEBIETE (Int. Cl.4)** G 21 C 17/00 G 01 H 13/00 G 01 H 1/00 G 01 H 3/00 G 01 M 7/00 G 01 N 3/00 G 01 N 29/00 |
| A | GB-A-2 082 324 (R.J. REDDING) --- | | |
| A | WO-A-8 704 250 (M. JACOB) ----- | | |

Der vorliegende Recherchenbericht wurde für alle Patentansprüche erstellt

| Recherchenort | Abschlußdatum der Recherche | Prüfer |
|---|---|---|
| DEN HAAG | 02-01-1989 | FRITZ S.C. |